Europäisches Patentamt

European Patent Office

Office européen des brevets

(11) Numéro de publication: **0 290 326**
**A1**

## (12) DEMANDE DE BREVET EUROPEEN

(21) Numéro de dépôt: **88401049.7**

(22) Date de dépôt: **29.04.88**

(51) Int. Cl.⁴: **F 16 B 15/06**

(30) Priorité: **07.05.87 FR 8706597**

(43) Date de publication de la demande:
**09.11.88 Bulletin 88/45**

(84) Etats contractants désignés:
**AT BE CH DE ES FR GB GR IT LI LU NL SE**

(71) Demandeur: **Chéron, Henri**
**17 Rue G. Flaubert**
**F-87000 Limoges (FR)**

(72) Inventeur: **Chéron, Henri**
**17 Rue G. Flaubert**
**F-87000 Limoges (FR)**

(54) **Fiche de fixation.**

㉗ L'invention concerne une fiche se présentant sous la forme d'une tige de tôle d'acier un peu incurvée pour de multiples usages de fixation.

Les profils crantés (1) de cette tige permettent de la maintenir dans une pince chasse-clous.

A l'aide d'une cheville, ils permettent aussi de la maintenir bloquée dans les avant-trous des matériaux.

Des trous (3) percés sur toute la longueur de cette tige donnent la possibilité de l'arrimer par harpons ou par clous.

Fabriquée en toutes longueurs et grosseurs, elle peut aussi se terminer sous diverses formes, notamment de crochets pour la fixation de cables ou de tubes.

La pince se compose d'une barre d'acier (7) refendue dont les deux branches (8) font ressort.

Une poignée (9) faisant étrier (10) les maintient serrées sur la fiche.

Fig. 7

EP 0 290 326 A1

## Description

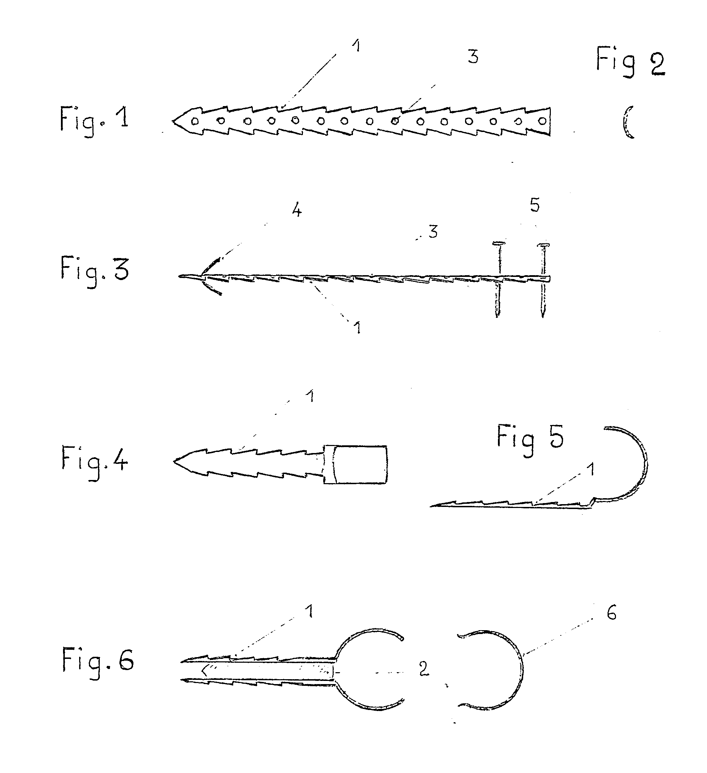

L'invention concerne une fiche se présentant sous la forme d'une tige légère en tôle d'acier (fig. 1 et 3) un peu incurvée (fig.2) pouvant servir à de multiples usages de fixation, en particulier pour les travaux de bâtiment ou de bricolage.

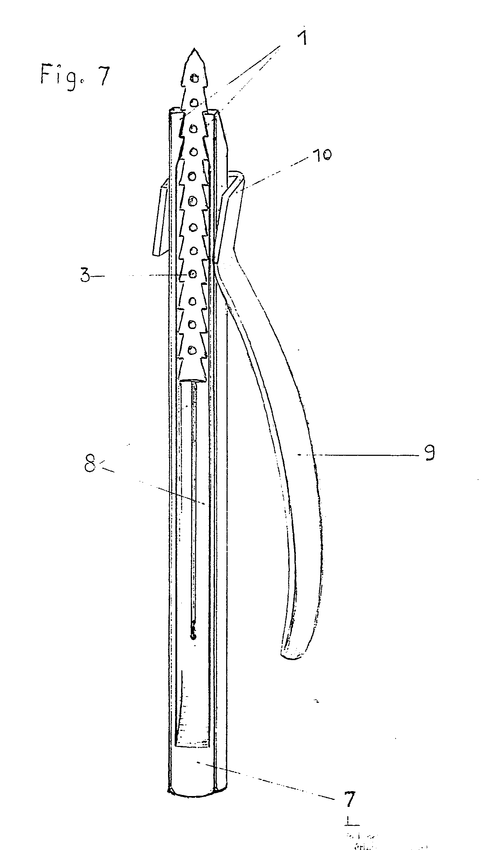

Les profils crantés (1) de cette tige permettent de la maintenir dans une pince spéciale (fig.7) faisant office de chasseclous pour l'enfoncer dans le bois ou les matériaux tendres.

On a aussi la possibilité de la (les) placer dans un avant-trou et la (les) bloquer par une cheville (2) qui la (les) fait s'incruster solidement dans tous les matériaux.

Des trous (3) peuvent être percés sur la longueur de cette tige donnant la possibilité de passer en bout un cavalier en fil d'acier (4) pour faire harpon dans le matériau ainsi que celle de pouvoir arrimer l'autre extrémité par un ou plusieurs clous (5).

Ces fiches peuvent bien entendu être fabriquées en plusieurs grosseurs et en toutes longueurs pour être, le cas échéant, coupées ou faconnées à la demande.

Elles peuvent aussi se terminer sous diverses formes, notamment en forme de crochets (fig.4 et 5) pour la fixation de cables ou de tubes.

Dans ce cas on a la possibilité de jumeler deux fiches aux extrémités spécialement coudées, formant ainsi un clip (fig.6) pour la fixation des tubes.

Ce clip peut-être consolidé par l'adjonction d'un chapeau (6) constitué d'une demie bague en tôle d'acier faisant ressort.

La pince (fig.7) pour l'enfoncement des fiches se compose d'une barre d'acier (7) refendue formant ainsi deux branches (8) faisant ressort et qui sont crantées en bout (1) pour recevoir la fiche.

Une poignée (9) terminée par un simple étrier (10) s'adapte sur ces branches et permet de les tenir serrées sur la fiche.

## Revendications

1) Fiche de fixation en tôle un peu incurvée (fig.1 et 2) pouvant être maintenue dans une pince d'enfoncement (fig.7) ou d'être bloquée dans des avant-trous par une cheville et avec la possibilité d'être arrimée par des harpons ou par des clous.

2) Fiche de fixation selon la revendication 1 caractérisée par ses profils crantés (1) qui lui permettent d'être maintenue dans la pince d'enfoncement et de s'agripper dans le matériau.

3) Fiche de fixation selon les revendications 1 et 2 caractérisée par sa surface perforée (3) permettant de l'arrimer par des harpons et/ou par des clous.

4) Fiches selon l'une quelconque des revendications précédentes et jumelées pour faire clip (fig.6) caractérisées par un double clip de consolidation (6).

5) Pince d'enfoncement selon les revendications 1 et 2 caractérisée par sa poignée étrier (10).

0290326

Fig. 1

Fig 2

Fig. 3

Fig.4

Fig 5

Fig. 6

0290326

Fig. 7

Office européen
des brevets

**RAPPORT DE RECHERCHE EUROPEENNE**

Numero de la demande

EP  88 40 1049

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | DE-U-1 928 278  (W. PFEIFFER)<br>* page 4, lignes 8-15; figures 1,5 *<br>--- | 1,2,5 | F 16 B  15/06 |
| A | FR-A-1 202 255  (VIRALU)<br>* figures *<br>--- | 1,3,4 | |
| A | US-A-3 511 127  (GISONDI)<br>* figures 5,2b *<br>--- | 1 | |
| A | BE-A- 470 222  (ROSENBAUM)<br>* figure 6A *<br>----- | 1 | |

**DOMAINES TECHNIQUES RECHERCHES (Int. Cl.4)**

F 16 B  15/00
F 16 B  19/00
F 16 B  13/00
E 04 F  13/00

Le présent rapport a été établi pour toutes les revendications

| Lieu de la recherche | Date d'achèvement de la recherche | Examinateur |
|---|---|---|
| BERLIN | 15-06-1988 | SCHAEFFLER C.A.A. |